# EUROPEAN PATENT APPLICATION

(11) **EP 4 756 971 A1**
(43) Date of publication of application: **10.06.2026**
(21) Application number: 24886042.1
(22) Date of filing: 30.09.2024
(51) Int. Cl.: H01M 10/0585, H01M 10/0562, H01M 10/44, H01M 10/04, H01M 10/052

(54) **METHOD FOR MANUFACTURING ALL-SOLID-STATE BATTERY AND ALL-SOLID-STATE BATTERY MANUFACTURED THEREBY**

(30) Priority: 30.10.2023 KR 20230146371
(71) Applicant: LG Energy Solution, Ltd., Seoul 07335 (KR)
(72) Inventor: CHOI, Lak Young, Daejeon 34122 (KR); WOO, Seunghe, Daejeon 34122 (KR); KIM, Jeonggil, Daejeon 34122 (KR); LEE, Jaegil, Daejeon 34122 (KR); LEE, Gyeongseop, Daejeon 34122 (KR); AHN, Sanghyeok, Daejeon 34122 (KR)
(74) Representative: Goddar, Heinz J.
(86) International application number: PCT/KR2024/014839
(87) International publication number: WO 2025/095364

(57) **Abstract**

The present invention relates to a method of manufacturing an all-solid-state battery, comprising: (1) manufacturing an all-solid-state battery by stacking a positive electrode current collector, a positive electrode layer, a solid electrolyte layer, a negative electrode layer, and a first negative electrode current collector in a sequence; (2) charging and discharging the manufactured all-solid-state battery; (3) peeling off and removing the first negative electrode current collector from the all-solid-state battery in a discharged state; and (4) disposing a second negative electrode current collector in contact with the negative electrode layer; and an all-solid-state battery manufactured by the above method.

## Description

### [Technical Field]

This application claims the benefit of priority to Korean Patent Application No. 10-2023-0146371, filed October 30, 2023, the disclosures of which are incorporated herein by reference as part of this specification.

The present invention relates to a method of manufacturing an all-solid-state battery and to an all-solid-state battery manufactured thereby.

### [Related Art]

While lithium secondary batteries have been primarily used in small-scale applications such as mobile devices and laptop computers, the research direction has recently expanded to medium and large-scale applications such as energy storage systems (ESS) and electric vehicles (EV).

For these medium- to large-sized lithium secondary batteries, unlike small-sized ones, the operating environment is harsher (e.g., temperature, shock) and more batteries need to be used, so safety needs to be ensured along with good performance and affordable price.

Most commercially available lithium secondary batteries currently utilize organic liquid electrolytes, which are lithium salts dissolved in a flammable organic solvent, and therefore pose a potential risk of leakage, ignition, and explosion. Therefore, the use of solid electrolytes to replace the organic liquid electrolytes has been attracting attention as an alternative to overcome the above safety issues.

Lithium secondary batteries using solid electrolytes offer advantages such as enhanced safety, improved reliability by preventing electrolyte leakage, and facilitating the manufacture of thin batteries. In addition, lithium metal can be used as a negative electrode to improve energy density, which is expected to be applied to small-sized secondary batteries and high-capacity secondary batteries for electric vehicles, making it the next-generation battery.

However, lithium secondary batteries using solid electrolytes have lower ionic conductivity than liquid electrolytes and suffer from poorer output characteristics, especially at low temperatures. In addition, there are problems such as poor surface adhesion of the solid electrolyte to the active material compared to the liquid electrolyte, causing an increase in interfacial resistance due to the volume expansion of the active material during the charge and discharge process, and the distribution of the solid electrolyte without direct contact with the electrode active material, leading to decreased output characteristics or capacity characteristics relative to the amount of conductive material input.

To address these issues, lithium secondary batteries which typically use solid electrolytes, i.e., all-solid-state batteries, involve pressurizing step to improve the interfacial properties of the solid electrolyte and the active material during the operation process.

However, pressurization in harsh environments to increase the contact area between the active material particles and the solid electrolyte can lead to brittleness of the active material particles and inhomogeneous lithium dendrite precipitation, and there is an urgent need to address these issues.

### [Prior Art Reference]

### [Patent Reference]

(Patent Reference 1) Korean Laid-open Patent Publication No. 10-2022-0012623 (February 4, 2022)

### [Detailed Description of the Invention]

### [Technical Problem]

The object of the present invention is to provide a method for manufacturing an all-solid-state battery having improved capacity and lifetime characteristics by eliminating the interfacial contact defect in the battery caused by the deformation of the current collector or the irregularity of the electrode caused by the unevenly precipitated lithium dendrite by peeling off the negative electrode current collector of the all-solid-state battery after the initial charge and discharge and stacking a new negative electrode current collector.

Another object of the present invention is to provide an all-solid-state battery manufactured by the above method of manufacturing an all-solid-state battery.

### [Technical Solution]

One example of the present invention provides a method of manufacturing an all-solid-state battery, comprising: (1) manufacturing an all-solid-state battery by stacking a positive electrode current collector, a positive electrode layer, a solid electrolyte layer, a negative electrode layer, and a first negative electrode current collector in a sequence; (2) charging and discharging the manufactured all-solid-state battery; (3) peeling and removing the first negative electrode current collector from the all-solid-state battery in a discharged state; and (4) disposing a second negative electrode current collector in contact with the negative electrode layer.

The step of peeling and removing the first negative electrode current collector in step (3) may be performed when a discharge capacity is 80% or less of the discharge capacity after the first charge and discharge cycle, when charging and discharging in step (2).

The step (1) may further comprise a pre-pressing process of stacking the positive electrode current collector, positive electrode layer, solid electrolyte layer, negative electrode layer, and first negative electrode current collector in order, and pressing them.

The step (4) may further comprise a post-pressing process of positioning the second negative electrode current collector to abut the negative electrode layer, and pressing them.

The pre-pressing process may be performed at 100 to 1,000 MPa.

The post-pressing process may be performed at 10 to 500 MPa.

The positive electrode layer may comprise one or more of a sulfide-based solid electrolyte, an oxide-based solid electrolyte, a polymer-based solid electrolyte, and combinations thereof.

The pressurization may be performed via Warm Isostatic Pressure.

The charging and discharging may take place in a voltage range of 2.5 to 4.5 V.

Another example of the present invention provides an all-solid-state battery produced by the above method, comprising a positive electrode current collector, a positive electrode layer, a solid electrolyte layer, a negative electrode layer, and a second negative electrode current collector.

### [Advantageous Effects]

According to the present invention, the capacity and lifetime characteristics of an all-solid-state battery can be improved by eliminating the interfacial contact defect in the battery caused by the deformation of the current collector or the irregularity of the electrode caused by the unevenly precipitated lithium dendrite by peeling off the negative electrode current collector of the all-solid-state battery after the initial charge and discharge and stacking a new negative electrode current collector.

### [Brief Description of Drawing]

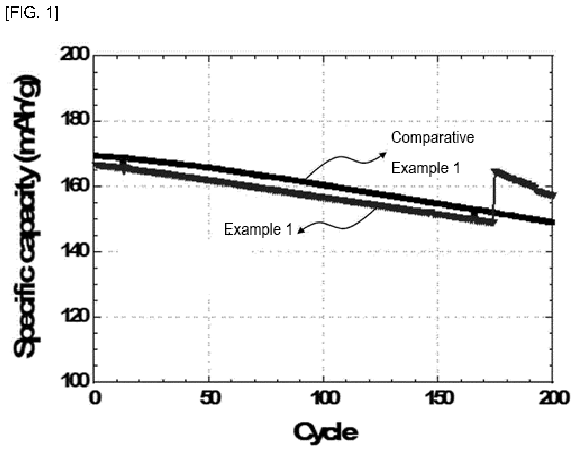

FIG. 1 is a graph depicting the lifetime characteristics of an all-solid-state battery prepared according to a method of manufacturing an all-solid-state battery according to one example and comparative example of the present invention.

### [Best Mode]

Examples of the present invention are described in detail below. The terms and words used in this specification and claims are not to be construed in their ordinary or dictionary sense, but rather in a sense and concept consistent with the technical idea of the present invention, based on the principle that the inventor may define the concept of a term as he/her sees fit to best describe his/her invention. Accordingly, it is to be understood that the configurations described in the examples described herein are only the most preferred examples of the invention and do not represent all of the technical ideas of the invention, and that there may be various equivalents and variations that may be substituted for them at the time of the application.

Throughout the specification, whenever any part "includes" any component, it means that it can include more of the other component, not that it excludes the other component, unless specifically stated to the contrary.

In addition, the description limiting or further specifying components may apply to any invention and is not limited to any particular invention, unless otherwise specified.

Also, throughout the description and claims of the present invention, singular terms include the plural ones unless otherwise indicated.

In addition, throughout the description and claims of the present invention, "or" includes "and" unless otherwise noted. Therefore, "including A or B" means all three of the following cases: including A, including B, or including both A and B.

Also, all numerical ranges include values at both ends and all intermediate values in between, unless explicitly stated to exclude them.

Throughout the present disclosure, the average particle size of a particle may be a median diameter (D50) measured, for example, using a laser particle size distribution meter.

### Method for Producing an All-solid-state battery

The method of manufacturing an all-solid-state battery of the present invention includes the steps of (1) manufacturing an all-solid-state battery by stacking a positive electrode current collector, a positive electrode layer, a solid electrolyte layer, a negative electrode layer, and a first negative electrode current collector in a sequence; (2) charging and discharging the manufactured all-solid-state battery; (3) peeling and removing the first negative electrode current collector from the all-solid-state battery in a discharged state; and (4) disposing a second negative electrode current collector in contact with the negative electrode layer.

The method of manufacturing an all-solid-state battery of the present invention is described in detail step by step below.

First, an all-solid-state battery is prepared by stacking (1) a positive electrode current collector, a positive electrode layer, a solid electrolyte layer, a negative electrode layer, and a first negative electrode current collector in order.

The positive electrode current collector may typically have a thickness of 3 to 500 µm. The positive electrode current collector is not particularly limited as long as it has a high conductivity without causing chemical changes in the battery, for example, stainless steel, aluminum, nickel, titanium, calcined carbon, or aluminum or stainless steel whose surface is treated with carbon, nickel, titanium, or silver can be used. The current collector can form microscopic irregularities on its surface to strengthen the binding force with the positive electrode layer, and various forms can be used, such as films, sheets, foils, nets, porous materials, foams, non-woven materials, etc.

The positive electrode layer may include a positive electrode active material, a solid electrolyte, a conductive material, and a binder.

The positive electrode active material is not particularly limited, as long as it is a lithium complex oxide-based material capable of reversible insertion and removal of lithium ions. For example, it may comprise a complex oxide of one or more of cobalt, manganese, nickel, iron, or a combination thereof; and lithium.

As a more specific example, a compound represented by any of the following chemical formulae can be used as the positive electrode active material: LiₐA_{1-b}R_{b}D₂ (wherein 0.90 ≤ a ≤ 1.8 and 0 ≤ b ≤ 0.5); LiₐE_{1-b}R_{b}O_{2-c}D_{c} (wherein 0.90 ≤ a ≤ 1.8, 0 ≤ b ≤ 0.5, and 0 ≤ c ≤ 0.05); LiE_{2-b}R_{b}O_{4-c}D_{c} (wherein 0 ≤ b ≤ 0.5, 0 ≤ c ≤ 0.05); LiₐNi_{1-b-c}Co_{b}R_{c}D_{α} (wherein 0.90 ≤ a ≤ 1.8, 0 ≤ b ≤ 0.5, 0 ≤ c ≤ 0.05 and 0 < α ≤ 2); LiₐNi_{1-b-c}Co_{b}R_{c}O_{2-α}Z_{α} (wherein 0.90 ≤ a ≤ 1.8, 0 ≤ b ≤ 0.5, 0 ≤ c ≤ 0.05 and 0 < α < 2); LiₐNi_{1-b-c}Co_{b}R_{c}O_{2-α}Z₂ (wherein 0.90 ≤ a ≤ 1.8, 0 ≤ b ≤ 0.5, 0 ≤ c ≤ 0.05 and 0 < α < 2); LiₐNi_{1-b-c}Mn_{b}R_{c}D_{α} (wherein 0.90 ≤ a ≤ 1.8, 0 ≤ b ≤ 0.5, 0 ≤ c ≤ 0.05 and 0 < α ≤ 2); LiₐNi_{1-b-c}Mn_{b}R_{c}O_{2-α}Z_{α} (wherein 0.90 ≤ a ≤ 1.8, 0 ≤ b ≤ 0.5, 0 ≤ c ≤ 0.05 and 0 < α < 2); LiₐNi_{1-b-c}Mn_{b}R_{c}O_{2-α}Z₂ (wherein 0.90 ≤ a ≤ 1.8, 0 ≤ b ≤ 0.5, 0 ≤ c ≤ 0.05 and 0 < α < 2); LiₐNi_{b}E_{c}G_{d}O₂ (wherein 0.90 ≤ a ≤ 1.8, 0 ≤ b ≤ 0.9, 0 ≤ c ≤ 0.5 and 0.001 ≤ d ≤ 0.1); LiₐNi_{b}Co_{c}Mn_{d}GₑO₂ (wherein 0.90 ≤ a ≤ 1.8, 0 ≤ b ≤ 0.9, 0 ≤ c ≤ 0.5, 0 ≤ d ≤0.5 and 0 ≤ e ≤ 0.1); LiₐNiG_{b}O₂ (wherein 0.90 ≤ a ≤ 1.8 and 0.001 ≤ b ≤ 0.1); LiₐCoG_{b}O₂ (wherein 0.90 ≤ a ≤ 1.8 and 0.001 ≤ b ≤ 0.1); LiₐMnG_{b}O₂ (wherein 0.90 ≤ a ≤ 1.8 and 0.001 ≤ b ≤ 0.1); LiₐMn₂G_{b}O₄ (wherein 0.90 ≤ a ≤ 1.8 and 0.001 ≤ b ≤ 0.1); QO₂; QS₂; LiQS₂; V₂O₅; LiV₂O₅; LiTO₂; LiNiVO₄; Li_{(3-f)}J₂(PO₄)₃ (wherein 0 ≤ f ≤ 2); Li_{(3-f)}Fe₂(PO₄)₃ (wherein 0 ≤ f ≤ 2); and LiFePO₄.

In the above formulae, A is Ni, Co, Mn, or a combination thereof; R is Al, Ni, Co, Mn, Cr, Fe, Mg, Sr, V, a rare earth element, or a combination thereof; D is O, F, S, P, or a combination thereof; E is Co, Mn, or a combination thereof; Z is F, S, P, or any combination thereof; G is Al, Cr, Mn, Fe, Mg, La, Ce, Sr, V, or any combination thereof; Q is Ti, Mo, Mn, or any combination thereof; T is Cr, V, Fe, Sc, Y, or any combination thereof; and J is V, Cr, Mn, Co, Ni, Cu, or any combination thereof.

The positive electrode active material may be comprised in an amount of 50 to 95 parts by weight, based on 100 parts by weight of the total positive electrode layer. In this case, 100 parts by weight of the total positive electrode layer may mean including positive electrode active material, conductive material, sulfide-based solid electrolyte, binder, and other additives, and may specifically mean 100 parts by weight of the total positive electrode layer excluding the current collector, and the same may be applied to the content of each component included in both electrodes hereinafter.

For example, the content of the positive electrode active material may be 50 parts or more, 60 parts or more, 70 parts or more, 75 parts or more, 78 parts or more, or 80 parts or more, 95 parts or less, 90 parts or less, 85 parts or less, based on 100 parts by weight of the total positive electrode layer.

If the content of the positive electrode active material is less than 50 parts by weight based on 100 parts by weight of the total positive electrode layer, there may be a problem that the capacity and overall energy density of the electrode are reduced, and if it exceeds 95 parts by weight, there may be a problem that the interfacial resistance between the positive electrode active material and the solid electrolyte is increased due to the increase of voids in the positive electrode layer, so it is necessary to appropriately control the content of the positive electrode active material within the above range for the positive electrode layer of the all-solid-state battery according to the present invention.

The conductive material is not particularly limited as long as it has conductivity without causing chemical changes in the battery, for example, graphite, such as natural graphite or artificial graphite; carbon black, such as carbon black, acetylene black, ketjen black, channel black, furnace black, lamp black, or thermal black; conductive fibers, such as carbon fibers or metal fibers; metal powders, such as carbon fluoride, aluminum, or nickel powder; conductive whiskers, such as zinc oxide, or potassium titanate; conductive metal oxides, such as titanium oxide; and conductive materials, such as polyphenylene derivatives. The conductive material may be comprised in an amount of about 0.01 to 10 parts by weight, or 0.01 to 5 parts by weight, or 0.01 to 3 parts by weight, based on 100 parts by weight of the total positive electrode layer.

The binder is a component added in consideration of the adhesion of the positive electrode active material, the solid electrolyte and the conductive material contained in the positive electrode layer, and may be of any kind available for electrode formation in the technical field in the art, for example, at least one selected from the group consisting of nitrile-butadiene rubber (NBR), polystyrene, and styrene butadiene rubber (SBR), and preferably, a binder of the butadiene rubber family, such as nitrile-butadiene rubber (NBR) or styrene butadiene rubber (SBR). The binder may be comprised in an amount of about 0.1 to 10 parts by weight, based on 100 parts by weight of the total positive electrode layer.

If the content of the binder is less than 0.1 parts by weight based on 100 parts by weight of the total positive electrode, the adhesion of the electrode may decrease, which may cause problems with processability and stability of the coating product, and if it exceeds 10 parts by weight, the resistance of the electrode may increase, which may reduce the cell lifetime and output characteristics, so it should be appropriately adjusted within the above range.

In one example of the present invention, the solid electrolyte may comprise one or more of a sulfide-based solid electrolyte, an oxide-based solid electrolyte, a polymer-based solid electrolyte, and combinations thereof, and more specifically, the solid electrolyte may comprise a sulfide-based solid electrolyte.

The sulfide-based solid electrolyte included in the positive electrode layer may be, for example, represented by Formula 1 below.

[Formula 1] LiₐM_{b}S_{c}X_{d}

wherein M is Sn, Mg, Ba, B, Al, Ga, In, Si, Ge, Pb, N, P, As, Sb, Bi, Ti, V, Cr, Mn, Fe, Co, Ni, Cu, Y, Zr, Nb, Mo, Tc, Ru, Rh, Pd, Ag, Hf, Ta, W, or La, wherein X is F, CI, Br, I, Se, Te, or O, and wherein 0<a≤6, 0<b≤6, 0<c≤6, and 0<d≤6.

For example, in Formula 1, M can be B, Si, Ge, P, or N.

For example, in Formula 1, X can be F, Cl, Br, I, or O.

For example, the sulfide-based solid electrolyte represented by Formula 1 above may be Li₂S-P₂S₅-LiBr, Li₂S-P₂S₅-LiCI-LiBr, Li₂S-SiS₂-LiBr, Li₂S-P₂S₅, Li₂S-P₂S₅-LiCl, Li₂S-P₂S₅-Li₂O, Li₂S-P₂S₅-Li₂O-LiI, Li₂S-SiS₂, Li₂S-SiS₂-LiI, Li₂S-SiS₂-LiCl, Li₂S-SiS₂-B₂S₃-LiI, Li₂S-SiS₂-P₂S₅-LiI, Li₂S-B₂S₃, Li₂S-GeS₂, Li₂S-SiS₂-Li₃PO₄, or any combination thereof.

The sulfide-based solid electrolyte may have an argyrodite-type crystal structure. As the sulfide-based solid electrolyte has an argyrodite-type crystal structure, the sulfide-based solid electrolyte has high purity and crystallinity, and can form a stable interfacial phase, which has a high energy density and greatly improves the potential stability and ionic conductivity.

The sulfide-based solid electrolyte may be comprised in an amount of 5 to 49 parts by weight, based on 100 parts by weight of the total positive electrode layer.

The content of the sulfide-based solid electrolyte may be, for example, 5 parts by weight or more, 6 parts by weight or more, 7 parts by weight or more, 8 parts by weight or more, 9 parts by weight or more, 10 parts by weight or more, 11 parts by weight or more, 12 parts by weight or more, 13 parts by weight or more, 14 parts by weight or more, 15 parts by weight or more, 16 parts by weight or more, 17 parts by weight or more, 18 parts by weight or more, 19 parts by weight or more, 19.4 parts by weight or more, 49 parts by weight or less, 45 parts by weight or less, 40 parts by weight or less, 35 parts by weight or less, 30 parts by weight or less, 25 parts by weight or less, 24 parts by weight or less, 23 parts by weight or less, 22 parts by weight or less, 21 parts by weight or less, or 20 parts by weight or less, based on 100 parts by weight of the total positive electrode layer. Preferably, the content of the sulfide-based solid electrolyte may be comprised in an amount of 12 to 20 parts by weight based on 100 parts by weight of the total positive electrode layer.

If the content of the sulfide-based solid electrolyte is less than 5 parts by weight based on 100 parts by weight of the total positive electrode layer, there may be a problem that the capacity and the overall energy density of the electrode are reduced due to the increase of voids in the positive electrode layer, which increases the interfacial resistance between the positive electrode active material and the solid electrolyte, and if it exceeds 49 parts by weight, there may be a problem that the capacity and the overall energy density of the electrode are reduced, so it is necessary to appropriately adjust the content of the sulfide-based solid electrolyte within the above range.

The average particle size of the sulfide-based solid electrolyte may be 0.1 to 5 µm. For example, the sulfide-based solid electrolyte may have an average particle size of 0.1 to 3 µm, 0.1 to 2 µm, 0.1 to 1 µm, 0.1 to 0.9 µm, 0.1 to 0.8 µm, 0.1 to 0.7 µm, 0.1 to 0.6 µm, or 0.1 to 0.5 µm. The average particle size of the sulfide-based solid electrolyte may be, for example, a volume equivalent median diameter (D50) measured using a laser particle size distribution meter.

If the average particle size of the sulfide-based solid electrolyte is less than 0.1 µm, there may be a problem that the sulfide-based solid electrolyte particles may easily agglomerate or may not be uniformly dispersed and may be biased in the electrode, and it may be difficult to form an effective interface between the positive electrode active material and the sulfide-based solid electrolyte, and if it exceeds 5 µm, there may be a problem that voids may occur in the positive electrode active material layer and the ionic conductivity of the electrode may decrease, so it is desirable to appropriately adjust the sulfide-based solid electrolyte to have an average particle size in the above range.

The positive electrode layer can be prepared according to methods well known in the art, and is not limited to a particular method of preparation, but can be prepared, for example, by a dry electrode process method in which a dough is prepared by mixing the positive electrode active material, a sulfide-based solid electrolyte, a conductive material and a binder, and then sheeting the dough, or by a wet process in which a slurry of positive electrode compound is prepared by mixing in a solvent and applying this positive electrode compound to the positive electrode current collector.

The positive electrode layer may further comprise, in addition to the positive electrode active material, solid electrolyte, conductive material and binder described above, additives such as, for example, fillers, coatings, dispersants, ionic conductivity aids and the like. The fillers, coatings, dispersants, ionic conductivity aids, and the like can be any of the known materials typically used for electrodes in all-solid-state batteries.

The solid electrolyte layer may be the same or different from the solid electrolyte contained in the positive electrode layer.

The solid electrolyte included in the solid electrolyte layer may include a sulfide-based solid electrolyte, and the sulfide-based solid electrolyte is the same as described above for the positive electrode layer, so a specific description thereof will be omitted.

The elastic modulus, or Young's modulus, of the solid electrolyte layer may be, for example, 35 GPa or less, 30 GPa or less, 27 GPa or less, 25 GPa or less, 23 GPa or less. The elastic modulus, or Young's modulus, of the solid electrolyte layer may be, for example, 10 to 35 GPa, 15 to 35 GPa, 15 to 30 GPa, or 15 to 25 GPa. As the solid electrolyte layer has an elastic modulus in this range, pressurization and/or sintering of the solid electrolyte contained in the solid electrolyte layer can be more easily accomplished.

The solid electrolyte layer further comprises, for example, a binder. The binder included in the solid electrolyte layer may be, for example, but not limited to, styrene butadiene rubber (SBR), polytetrafluoroethylene, polyvinylidene fluoride, polyethylene, or any other binder used in the art. The binder of the solid electrolyte layer may be the same or different from the binder of the positive electrode layer and the negative electrode layer.

The negative electrode layer may comprise a negative electrode active material, wherein the negative electrode active material may comprise one or more selected from, for example, a lithium metal, a lithium metal alloy, a carbon-based negative electrode active material, and a metallic or semi-metallic negative electrode active material.

The carbon-based negative electrode active material may comprise, in particular, amorphous carbon. Amorphous carbon can be, for example, but not necessarily limited to, carbon black (CB), acetylene black (AB), furnace black (FB), ketjen black (KB), graphene, or any other material that is classified as amorphous carbon in the art. Amorphous carbon is carbon that is not crystalline or has very low crystallinity, which is distinguished from crystalline or graphitic carbon.

The metallic or semi-metallic negative electrode active material includes at least one selected from the group consisting of gold (Au), platinum (Pt), palladium (Pd), silicon (Si), silver (Ag), aluminum (Al), bismuth (Bi), tin (Sn), and zinc (Zn), but is not necessarily limited thereto, and any material used as a metallic negative electrode active material or semi-metallic negative electrode active material forming an alloy or compound with lithium in the art can be used. For example, nickel (Ni) is not a metallic negative electrode active material because it does not form an alloy with lithium.

The negative electrode layer may comprise any one of these negative electrode active materials, or may comprise a mixture of a plurality of different negative electrode active materials. For example, the negative electrode active material layer comprises only amorphous carbon, or comprises one or more selected from the group consisting of gold (Au), platinum (Pt), palladium (Pd), silicon (Si), silver (Ag), aluminum (Al), bismuth (Bi), tin (Sn), and zinc (Zn). In another example, the negative electrode active material layer comprises a mixture of amorphous carbon and one or more selected from the group consisting of gold (Au), platinum (Pt), palladium (Pd), silicon (Si), silver (Ag), aluminum (Al), bismuth (Bi), tin (Sn), and zinc (Zn). The mixing ratio of amorphous carbon and silver (Ag), for example, is weight ratio of 10:1 to 1:2, 5:1 to 1:1, or 4:1 to 2:1, but is not necessarily limited to these ranges and is selected based on the required properties of the all-solid-state battery. This composition of the negative electrode active material further improves the cycling characteristics of all-solid-state battery.

The negative electrode active material comprised in the negative electrode layer comprises, for example, a mixture of first particles consisting of amorphous carbon and second particles consisting of metal or semi-metal. Metal or semi-metal includes, for example, gold (Au), platinum (Pt), palladium (Pd), silicon (Si), silver (Ag), aluminum (Al), bismuth (Bi), tin (Sn), and zinc (Zn). A semi-metal is otherwise a semiconductor. The content of the second particles is 8 to 60% by weight, 10 to 50% by weight, 15 to 40% by weight, or 20 to 30% by weight, based on the total weight of the mixture. The content of the second particles in this range further improves, for example, the cycling characteristics of all-solid-state batteries.

The negative electrode active material comprised in the negative electrode layer is, for example, in the form of particles. The negative electrode active material having a particulate form has an average particle size of, for example, 4 µm or less, 3 µm or less, 2 µm or less, 1 µm or less, or 900 nm or less. The negative electrode active material having a particulate form has an average particle size of, for example, 10 nm to 4 µm or less, 10 nm to 3 µm or less, 10 nm to 2 µm or less, 10 nm to 1 µm or less, or 10 nm to 900 nm or less. A negative electrode active material with an average particle size in this range further facilitates the reversible absorption and/or desorption of lithium during charge and discharge. The average particle size of the negative electrode active material may be, for example, a volume equivalent median diameter (D50) measured using a laser particle size distribution meter.

The thickness of the negative electrode layer is, for example, 50% or less, 40% or less, 30% or less, 20% or less, 10% or less, or 5% or less of the thickness of the positive electrode layer. The thickness of the negative electrode layer is, for example, 1 µm to 20 µm, 2 µm to 10 µm, or 3 µm to 7 µm. If the thickness of the negative electrode layer is too thin, the lithium dendrite that forms between the negative electrode layer and the negative electrode current collector will collapse the negative electrode layer, making it difficult to improve the cycling characteristics of the all-solid-state battery. If the thickness of the negative electrode layer is increased excessively, the energy density of the all-solid-state battery will decrease, and the internal resistance of the all-solid-state battery due to the negative electrode layer will increase, making it difficult to improve the cycling characteristics of the all-solid-state battery.

The negative electrode layer may comprise, for example, a binder. The binder may be, for example, but not necessarily limited to, styrene-butadiene rubber (SBR), polytetrafluoroethylene, polyvinylidene fluoride, polyethylene, vinylidene fluoride/hexafluoropropylene copolymer, polyacrylonitrile, polymethylmethacrylate, or the like, as long as they are used as binders in the art. A binder can consist of a single or multiple different binders.

The negative electrode layer includes a binder to stabilize the negative electrode layer on the negative electrode current collector. Furthermore, cracking of the negative electrode layer is suppressed despite volume changes and/or relative position changes of the negative electrode active material layer during charge and discharge. For example, if the negative electrode layer does not contain a binder, it is possible for the negative electrode layer to be easily separated from the negative electrode current collector. Where the negative electrode layer deviates from the negative electrode current collector, the negative electrode current collector is exposed and comes into contact with the solid electrolyte layer, thereby increasing the likelihood of a short circuit. The negative electrode layer is produced, for example, by applying a slurry in which the material constituting the negative electrode layer is dispersed onto a negative electrode current collector and drying it. The inclusion of the binder in the negative electrode layer allows for a stable dispersion of the negative electrode active material in the slurry. For example, when applying a slurry onto a negative electrode current collector by screen printing, it is possible to prevent clogging of the screen (e.g., clogging by the agglomerate in the negative electrode active material).

The first negative electrode current collector consists of, for example, a material that does not react with lithium, i.e., does not form both alloy and compound. The material consisting of the first negative electrode current collector may be, for example, but not necessarily limited to, copper (Cu), stainless steel, titanium (Ti), iron (Fe), cobalt (Co), and nickel (Ni), as long as it is used as an electrode current collector in the art. The first negative electrode current collector may consist of one of the metals described above, or may consist of an alloy or coating material of two or more metals. The first negative electrode current collector is, for example, in the form of a plate or foil.

The negative electrode layer may further comprise additives used in conventional all-solid-state batteries, such as fillers, dispersants, ionic conductors, and the like.

The all-solid-state battery may be prepared by manufacturing such a positive electrode current collector, a positive electrode layer, a solid electrolyte layer, a negative electrode layer, and a first negative electrode current collector, respectively, and then stacking them in sequence.

In one example of the present invention, the electrode assembly stacked in the above sequence may be a structure housed in a case, such as a pouch. It is also possible to fabricate an all-solid-state battery by stacking two or more electrode assemblies.

The all-solid-state battery may further comprise an elastic sheet on an outer side of at least one of the positive electrode current collector and the first negative electrode current collector. The elastic sheet may be represented as a buffer layer or an elastic layer, which allows pressure to be uniformly delivered to the electrode laminate to ensure good contact of the solid components, and may also play a role in relieving stresses transmitted to the solid electrolyte, and may play a role in inhibiting cracking of the solid electrolyte due to accumulation of stresses due to changes in the thickness of the electrode during charge and discharge.

In one example of the present invention, according to step (1), a pre-pressing process of stacking the positive electrode current collector, positive electrode layer, solid electrolyte layer, negative electrode layer, and first negative electrode current collector in order, and pressing them may be further comprised.

The pre-pressing process may be carried out at a temperature of, for example, 25°C to 90°C, and may be carried out at a pressure of 1,000 MPa or less, 800 MPa or less, or 600 MPa or less, such as 100 to 500 MPa. The pre-pressing process can be carried out, for example, by means of an isostatic press, a roll press or a plate press, and more particularly by means of a Warm Isostatic Pressure.

Next, (2) the prepared all-solid-state battery is charged and discharged.

An initial charge is performed by applying a voltage to the all-solid-state battery prepared by stacking the positive electrode current collector, the positive electrode layer, the solid electrolyte layer, the negative electrode layer, and the first negative electrode current collector prepared in step (1).

By charging the all-solid-state battery to a voltage higher than voltage in normal use during initial charging, the amorphousization of the alloy-based negative electrode active material can be promoted to improve the capacity retention rate of the battery. More specifically, the amorphized portions preferentially react with Li, but a larger proportion of them can be used to alleviate local stress concentrations, thereby improving capacity retention.

The "initial" charge is clearly distinct from the "first" charge, where "initial" is a broad concept that includes "first". For example, an initial charge, literally, means the first charge, but an initial charge is not necessarily the first charge. For example, if the all-solid-state battery is charged and discharged several times without raising the voltage of the all-solid-state battery sufficiently high, and then charged until the voltage is in an appropriately high range, the process corresponds to an initial charging process as described herein. The initial charge is preferably, for example, at least the first charge and the tenth charge or less.

The charging and discharging process may be repeated 1 to 500 times.

Next, (3) peeling and removing the first negative electrode current collector from the all-solid-state battery in a discharged state, and (4) disposing a second negative electrode current collector in contact with the negative electrode layer.

In step (3), the all-solid-state battery initially charged and discharged in step (2) is placed in a final discharged state, and the first negative electrode current collector is peeled off from the all-solid-state battery.

In the case of an all-solid-state battery subjected to repeated charging and discharging through step (2), the current collector may be deformed, or more specifically, lithium may precipitate on the first negative electrode current collector to form a dendrite, and the negative electrode active material may expand to cause interfacial degradation with the solid electrolyte, or the dendrite formed may form irregularities on the surface of the current collector, eventually accelerating the interfacial resistance due to poor contact between the first negative electrode current collector and the negative electrode layer.

In the past, the solution to this problem has been to improve the interfacial properties by applying pressure during the operation of the all-solid-state battery, but as excessive pressure is continuously applied to the all-solid-state battery, the active material may crack or the generated lithium dendrite may cause short circuit of the battery.

The present invention is characterized in that it is possible to prevent deterioration of the capacity and lifetime characteristics of the battery due to interfacial degradation by peeling off and removing the current collector itself, on which lithium is unevenly precipitated into an irregular shape and attached to the surface through the initial charge and discharge process of the all-solid-state battery, and placing a new second negative electrode current collector that has not participated in the initial charge and discharge process.

In step (3), the first negative electrode current collector used in the manufacture of the first all-solid-state battery is removed, and a new second negative electrode current collector is placed in contact with the negative electrode layer of the all-solid-state battery.

The second negative electrode current collector may be different from or the same as the first negative electrode current collector, but it is preferable to use the same shape, material, composition for both the first and second negative electrode current collectors.

In one example of the present invention, the step (4) may further comprise a post-pressing process of positioning the second negative electrode current collector to abut the negative electrode layer, and pressing them.

The post-pressing process may be carried out at a temperature of, for example, 25°C to 90°C, and may be carried out at a pressure of 500 MPa or less, 300 MPa or less, or 100 MPa or less, such as 10 to 500 MPa. The post-pressing process can be carried out, for example, by means of an isostatic press, a roll press or a plate press, and more particularly by means of a Warm Isostatic Pressure.

The pressure range of the post-pressing process may be the same as or less than the pressure range of the pre-pressing process. If the pressure range of the post-pressing process is greater than the pressure range of the pre-pressing process, the post-pressing process may cause physical damage to the structure of the all-solid-state battery formed through the pre-pressing process in step (1), such as cracking of the positive electrode active material or the like.

In one example of the present invention, the step of peeling and removing the first negative electrode current collector in step (3) may be performed when a discharge capacity is 80% or less of the discharge capacity after the first charge and discharge cycle, when charging and discharging in step (2).

For example, the step of peeling and removing the first negative electrode current collector in step (3) may be performed when a discharge capacity is 80% or less, 81% or less, 82% or less, 83% or less, 84% or less, 85% or less, 86% or less, 87% or less, 88% or less, 89% or less, 90% or less, 91% or less, 92% or less, 93% or less, 94% or less, or 95% or less relative to the discharge capacity after the first charge and discharge cycle, when charging and discharging in step (2).

Another example of the present invention provides an all-solid-state battery produced by the above method, comprising a positive electrode current collector, a positive electrode layer, a solid electrolyte layer, a negative electrode layer, and a second negative electrode current collector.

The positive electrode current collector, the positive electrode layer, the solid electrolyte layer, the negative electrode layer, and the second negative electrode current collector are described above, and will not be described in detail.

As described above, the all-solid-state battery according to the present invention is useful in portable devices such as cell phones, laptop computers, digital cameras, and in electric vehicles such as hybrid electric vehicles (HEVs), because it stably exhibits excellent discharge capacity, output characteristics, and capacity retention.

Accordingly, according to another example of the present invention, there is provided a cell module comprising the all-solid-state battery as a unit cell and a cell pack comprising same.

The battery module or battery pack may be utilized to power one or more of the following medium- to large-sized devices: a power tool; an electric vehicle, including an electric vehicle (EV), a hybrid electric vehicle, and a plug-in hybrid electric vehicle (PHEV); or a system for storing power.

### [Mode for Practicing the Invention]

Specific examples of the present invention are described below. However, the examples described below are intended only to specifically illustrate or describe the present invention and are not intended to limit the present invention. Furthermore, any matter not described herein can be sufficiently inferred by a person skilled in the art, and is hereby omitted.

### Example 1: Manufacturing of an all-solid-state battery

### 1. Manufacturing of a positive electrode

Based on a total of 100 parts by weight of the positive electrode layer, 83 parts by weight of LiNi_{0.8}Co_{0.1}Mn_{0.1}O₂ powder with a particle size (D50) of 5 µm as a positive electrode active material, 15 parts by weight of lithium argyrodite-type solid electrolyte Li₆PS₅Cl, 0.2 parts by weight of carbon black conductive material, and 1.5 parts by weight of polytetrafluoroethylene (PTFE) binder are mixed in mortar, and a sheet-like positive electrode layer is prepared using a roll press.

The positive electrode layer prepared above is dried in a vacuum oven at 100°C for 8 hours, and placed on one side of an aluminum current collector having a thickness of 15µm to produce a positive electrode.

### 2. Fabrication of a solid electrolyte layer

To a binder solution of an acrylic-based binder (SX-A334, Zeon) dissolved in isobutyl isobutyrate (IBIB) solvent, lithium argyrodite-type solid electrolyte Li₆PS₅Cl is added and stirred in a sink-type mixer to adjust to the appropriate viscosity. After adjusting the viscosity, 2 mm zirconia ball is added and stirred again with a sink-type mixer to make a slurry. The slurry contains 98.5% by weight solid electrolyte and 1.5% by weight binder. The slurry is applied by a bar coater on a release PET film and dried at room temperature to prepare a solid electrolyte layer.

### 3. Manufacturing of a negative electrode

A catalyst comprising a mixture of carbon black having a primary particle size (D50) of about 30 nm and silver (Ag) having an average particle size (D50) of about 60 nm in a weight ratio of 3:1 is prepared, and a negative electrode layer composition is prepared by adding 0.25 g of the catalyst to 2 g of an NMP solution containing 7% by weight polyvinylidene fluoride binder and mixing them. This is applied to the first negative electrode current collector, a nickel foil current collector, using a bar coater and vacuum dried to prepare a negative electrode with a negative electrode layer formed on the current collector.

### 4. Manufacturing of an all-solid-state battery

The prepared positive electrode, solid electrolyte layer, and negative electrode are cut, they are stacked in the following order: positive electrode, solid electrolyte layer, and negative electrode, and then the elastic sheet is stacked on top of the negative electrode. These are sealed in a pouch form and subjected to a pressure of 500 MPa and a high temperature of 80°C for 30 minutes, followed by a warm isostatic press (WIP) (pre-pressing process) to produce an all-solid-state battery. In the pressurized state, the thickness of the positive electrode layer is about 100 µm, the thickness of the negative electrode layer is about 7 µm, and the thickness of the solid electrolyte layer is about 60 µm.

### 5. Peeling and removal of the first negative electrode current collector

The above prepared all-solid-state battery was charged at a rate of 0.33C until the battery voltage was 4.25V, and then discharged at a rate of 0.33C until the battery voltage was 3.0V (1st cycle). The charge and discharge evaluation device "TOSCAT-3000" (trade name: Toyo System) was used to measure the discharge capacity of the first cycle.

After repeating the above charge and discharge process for 175 cycles, the discharge capacity for each cycle was measured, and the charge and discharge step was stopped when the discharge capacity of the all-solid-state battery reached 90% of the discharge capacity of the first cycle, and the pouch was disassembled in the discharged state to peel off and remove the first negative electrode current collector of the all-solid-state battery. The peeling of the first negative electrode current collector was performed from one edge toward the other edge, at an angle of 70° to the negative electrode layer, and at a peeling speed of 1000 mm/min.

### 6. Placement of a second negative electrode current collector

To the all-solid-state battery from which the first negative electrode current collector has been delaminated and removed, a second negative electrode current collector of the same type and size as the first negative electrode current collector, a nickel thin film current collector, is prepared, placed in contact with the negative electrode layer, sealed in a pouch form, and subjected to a high temperature of 80°C at 500 MPa for 30 minutes, and a warm isostatic press (WIP) (post-pressing process) to produce an all-solid-state battery.

### Comparative Example 1: Manufacturing of an all-solid-state battery

### 1. Manufacturing of a positive electrode

Based on a total of 100 parts by weight of the positive electrode layer, 83 parts by weight of LiNi_{0.8}Co_{0.1}Mn_{0.1}O₂ powder with a particle size (D50) of 5 µm as a positive electrode active material, 15 parts by weight of lithium argyrodite-type solid electrolyte Li₆PS₅Cl, 0.2 parts by weight of carbon black conductive material, and 1.5 parts by weight of polytetrafluoroethylene (PTFE) binder are mixed in mortar, and a sheet-like positive electrode layer is prepared using a roll press.

The positive electrode layer prepared above is dried in a vacuum oven at 100°C for 8 hours, and placed on one side of an aluminum current collector having a thickness of 15µm to produce a positive electrode.

### 2. Fabrication of a solid electrolyte layer

To a binder solution of an acrylic-based binder (SX-A334, Zeon) dissolved in isobutyl isobutyrate (IBIB) solvent, lithium argyrodite-type solid electrolyte Li₆PS₅Cl is added and stirred in a sink-type mixer to adjust to the appropriate viscosity. After adjusting the viscosity, 2 mm zirconia ball is added and stirred again with a sink-type mixer to make a slurry. The slurry contains 98.5% by weight solid electrolyte and 1.5% by weight binder. The slurry is applied by a bar coater on a release PET film and dried at room temperature to prepare a solid electrolyte layer.

### 3. Manufacturing of a negative electrode

A catalyst comprising a mixture of carbon black having a primary particle size (D50) of about 30 nm and silver (Ag) having an average particle size (D50) of about 60 nm in a weight ratio of 3:1 is prepared, and a negative electrode layer composition is prepared by adding 0.25 g of the catalyst to 2 g of an NMP solution containing 7% by weight polyvinylidene fluoride binder and mixing them. This is applied to the negative electrode current collector, a nickel foil current collector, using a bar coater and vacuum dried to prepare a negative electrode with a negative electrode layer formed on the current collector.

### 4. Manufacturing of an all-solid-state battery

The prepared positive electrode, solid electrolyte layer, and negative electrode are cut, they are stacked in the following order: positive electrode, solid electrolyte layer, and negative electrode, and then the elastic sheet is stacked on top of the negative electrode. These are sealed in a pouch form and subjected to a pressure of 500 MPa and a high temperature of 80°C for 30 minutes, followed by a warm isostatic press (WIP) (pre-pressing process) to produce an all-solid-state battery. In the pressurized state, the thickness of the positive electrode layer is about 100 µm, the thickness of the negative electrode layer is about 7 µm, and the thickness of the solid electrolyte layer is about 60 µm.

### 5. Charging and discharging an all-solid-state battery

The all-solid-state battery prepared above was charged at a rate of 0.33C until the battery voltage was 4.25V, and then discharged at a rate of 0.33C until the battery voltage was 3.0V.

The above charge and discharge was repeated for 200 cycles, and the discharge capacity of each cycle was measured using the charge and discharge evaluation device "TOSCAT-3000" (trade name: Toyo System).

The capacity retention rate of the discharge capacity of the all-solid-state battery according to Example 1 and Comparative Example 1 above was measured, and the results are shown in FIG. 1.

Referring to FIG. 1, it can be seen that for the all-solid-state battery according to Example 1, when the discharge capacity of the all-solid-state battery reaches 90% of the discharge capacity of the first cycle, the first negative electrode current collector is delaminated and removed, and a new second negative electrode current collector is placed, resulting in a significant improvement in the lifetime characteristics compared to the all-solid-state battery including the first negative electrode current collector.

While preferred examples of the present invention have been described in detail above, the scope of the invention is not limited thereto, and various modifications and improvements by those skilled in the art utilizing the basic concepts of the invention as defined by the following claims are also within the scope of the invention.

## Claims

1. A method for producing an all-solid-state battery, comprising
(1) preparing an all-solid-state battery by stacking a positive electrode current collector, a positive electrode layer, a solid electrolyte layer, a negative electrode layer, and a first negative electrode current collector in order;
(2) charging and discharging the prepared all-solid-state battery;
(3) peeling and removing the first negative electrode current collector from the all-solid-state battery in a discharged state; and
(4) disposing a second negative electrode current collector in contact with the negative electrode layer.

2. The method for producing an all-solid-state battery according to claim 1,
wherein the step of stripping and removing the first negative electrode current collector in step (3) is performed when a discharge capacity is 80% or less of the discharge capacity after the first charge and discharge cycle, when charging and discharging in step (2).

3. The method for producing an all-solid-state battery according to claim 1,
wherein the step (1) further comprises a pre-pressing process of stacking the positive electrode current collector, positive electrode layer, solid electrolyte layer, negative electrode layer, and first negative electrode current collector in order, and pressing them.

4. The method for producing an all-solid-state battery according to claim 1,
wherein the step (4) further comprises a post-pressing process of positioning the second negative electrode current collector to abut the negative electrode layer, and pressing them.

5. The method for producing an all-solid-state battery according to claim 3,
wherein the pre-pressing process is performed at 100 to 1,000 MPa.

6. The method for producing an all-solid-state battery according to claim 4,
wherein the post-pressing process is performed at 10 to 500 MPa.

7. The method for producing an all-solid-state battery according to claim 1,
wherein the positive electrode layer comprises one or more of a sulfide-based solid electrolyte, an oxide-based solid electrolyte, a polymer-based solid electrolyte, and combinations thereof.

8. The method for producing an all-solid-state battery according to claim 3 or 4, wherein the pressing is performed via Warm Isostatic Pressure.

9. The method for producing an all-solid-state battery according to claim 1,
wherein the charging and discharging take place in a voltage range of 2.5 to 4.5 V.

10. All-solid-state battery prepared by a process according to any one of claims 1 to 9, comprising a positive electrode current collector, a positive electrode layer, a solid electrolyte layer, a negative electrode layer, and a second negative electrode current collector.
